# EUROPEAN PATENT APPLICATION

(11) **EP 2 613 245 A2**
(43) Date of publication of application: **10.07.2013**
(21) Application number: 12185568.8
(22) Date of filing: 21.09.2012
(51) Int. Cl.: G06F 3/0488

(54) **Mobile terminal and control method thereof**

(30) Priority: 04.01.2012 KR 20120000843
(71) Applicant: LG Electronics, Seoul, 150-721 (KR)
(72) Inventor: Kim, Sujin, 153-801 Seoul (KR); Woo, Seunghyun, 153-801 Seoul (KR); Park, Jiyoung, 153-801 Seoul (KR); Jang, Greg, 153-801 Seoul (KR); Jung, Hayang, 153-801 Seoul (KR); Jeon, Taeyoung, 153-801 Seoul (KR)
(74) Representative: Cabinet Plasseraud

(57) **Abstract**

A mobile terminal including a wireless communication unit configured to wirelessly communicate with at least one other terminal; a touch screen display configured to display particular contents; and a controller configured to obtain a first touch input action on the touch screen display that lasts longer than a predetermined duration, display more detailed information about the particular contents displayed on the display as long as the first touch input action is being maintained, and stop displaying the more detailed information when the first touch input action is released.

## Description

### CROSS-REFERENCE TO RELATED APPLICATIONS

This application claims the benefit of earlier filing date and right of priority to Korean Patent Application No. 10-2012-0000843, filed on Jan 04, 2012, the contents of which are incorporated by reference herein in their entirety.

### FIELD OF THE INVENTION

The present invention relates to a mobile terminal and a control method thereof and, more particularly, to a mobile terminal capable of effectively expressing information related to displayed contents to a user, and a control method thereof

### DISCUSSION OF THE RELATED ART

As functions of terminals such as personal computers, laptop computers, cellular phones diversify, the terminals become multimedia players having multiple functions for capturing pictures or moving images, playing music, moving image files and games and receiving broadcasting programs.

Terminals can be categorized as mobile terminals and stationary terminals. The mobile terminals can be further comprised of handheld terminals and vehicle mount terminals according to whether users can personally carry the terminals. Conventional terminals including mobile terminals provide an increasing number of complex and various functions.

To support and enhance the increasing number of functions in a terminal, improving a structural part and/or a software part of the terminal would be desirable.

In addition, the necessity of effectively displaying information by using a touch function of a mobile terminal has emerged.

### SUMMARY OF THE INVENTION

An aspect of the present invention provides a mobile terminal capable of effectively expressing information related to displayed contents to a user, and a control method thereof.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention.

FIG. 1 is a block diagram of a mobile terminal according to an embodiment;

FIG. 2A is a front perspective view of the mobile terminal according to an embodiment;

FIG. 2B is a rear perspective view of the mobile terminal according to an embodiment;

FIG. 3 is a view for explaining a proximity depth of a proximity sensor;

FIG. 4 is a flow chart illustrating an operation of the mobile terminal according to an embodiment;

FIGS. 5 and 6 are views showing a process of displaying related information of the mobile terminal according to an embodiment;

FIG. 7 is a view showing a touch input for displaying related information of the mobile terminal;

FIG. 8 is a view showing a method for displaying related information of the mobile terminal;

FIG. 9 is a view showing types of information displayed on the mobile terminal;

FIGS. 10 and 11 are views showing another method for displaying different related information of the mobile terminal;

FIGS. 12 and 13 are views showing another method for displaying different related information of the mobile terminal;

FIGS. 14 to 20 are views showing another method for displaying different related information of the mobile terminal;

FIGS. 21 and 22 are views showing another method for displaying different related information of the mobile terminal; and

FIGS. 23 to 27 are views showing another method for displaying different related information of the mobile terminal.

### DETAILED DESCRIPTION

Arrangements and embodiments may now be described more fully with reference to the accompanying drawings, in which exemplary embodiments may be shown. Embodiments may, however, be embodied in many different forms and should not be construed as being limited to embodiments set forth herein; rather, embodiments may be provided so that this disclosure will be thorough and complete, and will fully convey the concept to those skilled in the art.

A mobile terminal may be described below with reference to the accompanying drawings. In the following description, suffixes "module" and "unit" may be given to components of the mobile terminal in consideration of only facilitation of description and do not have meanings or functions discriminated from each other.

The mobile terminal may include a cellular phone, a smart phone, a laptop computer, a digital broadcasting terminal, personal digital assistants (PDA), a portable multimedia player (PMP), a navigation system and/or so on.

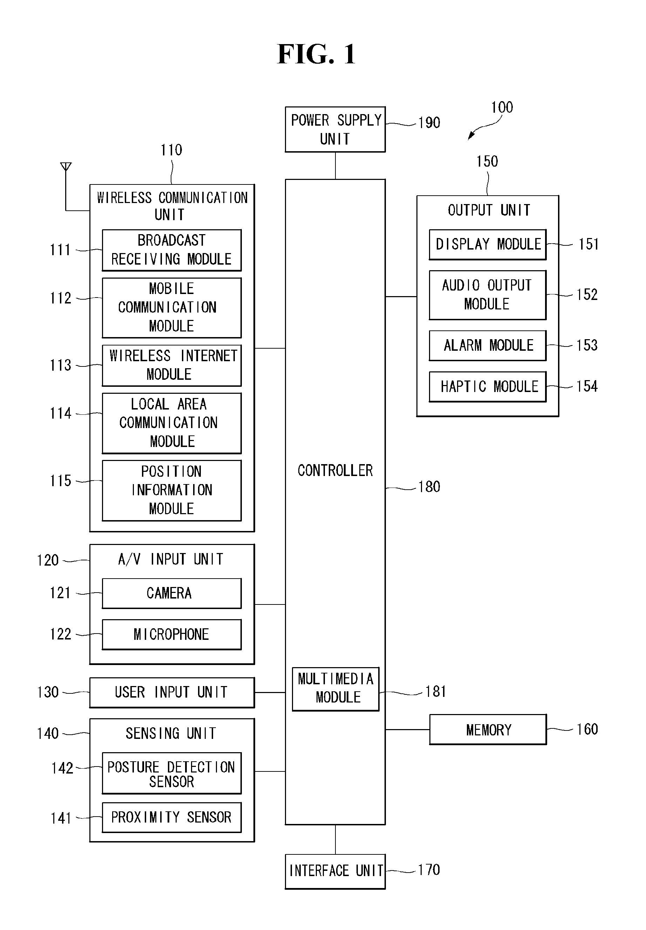

FIG. 1 is a block diagram of a mobile terminal according to an embodiment. Other embodiments, configurations and arrangements may also be provided.

As shown, the mobile terminal 100 may include a wireless communication unit 110 (or radio communication unit), an audio/video (A/V) input unit 120, a user input unit 130, a sensing unit 140, an output unit 150, a memory 160, an interface 170, a controller 180, and a power supply 190. The components shown in FIG. 1 may be essential parts and/or a number of components included in the mobile terminal 100 may vary. Components of the mobile terminal 100 may now be described.

The wireless communication unit 110 may include at least one module that enables radio communication between the mobile terminal 100 and a radio communication system or between the mobile terminal 100 and a network in which the mobile terminal 100 is located. For example, the wireless communication unit 110 may include a broadcasting receiving module 111, a mobile communication module 112, a wireless Internet module 113, a short range communication module 114 (or local area communication module), and a location information module 115 (or position information module).

The broadcasting receiving module 111 may receive broadcasting signals and/or broadcasting related information from an external broadcasting management server through a broadcasting channel. The broadcasting channel may include a satellite channel and a terrestrial channel, and the broadcasting management server may be a server that generates and transmits broadcasting signals and/or broadcasting related information or a server that receives previously created broadcasting signals and/or broadcasting related information and transmits the broadcasting signals and/or broadcasting related information to a terminal.

The broadcasting signals may include not only TV broadcasting signals, radio broadcasting signals, and data broadcasting signals but also signals in the form of a combination of a TV broadcasting signal and a radio broadcasting signal. The broadcasting related information may be information on a broadcasting channel, a broadcasting program or a broadcasting service provider, and may be provided even through a mobile communication network. In the latter case, the broadcasting related information may be received by the mobile communication module 112.

The broadcasting related information may exist in various forms. For example, the broadcasting related information may exist in the form of an electronic program guide (EPG) of a digital multimedia broadcasting (DMB) system or in the form of an electronic service guide (ESG) of a digital video broadcast-handheld (DVB-H) system.

The broadcasting receiving module 111 may receive broadcasting signals using various broadcasting systems. More particularly, the broadcasting receiving module 111 may receive digital broadcasting signals using digital broadcasting systems such as a digital multimedia broadcasting-terrestrial (DMB-T) system, a digital multimedia broadcasting-satellite (DMB-S) system, a media forward link only (MediaFLO) system, a DVB-H and integrated services digital broadcast-terrestrial (ISDB-T) systems. The broadcasting receiving module 111 may receive signals from broadcasting systems providing broadcasting signals other than the above-described digital broadcasting systems.

The broadcasting signals and/or broadcasting related information received through the broadcasting receiving module 111 may be stored in the memory 160. The mobile communication module 112 may transmit/receive a radio signal to/from at least one of a base station, an external terminal and a server on a mobile communication network. The radio signal may include a voice call signal, a video telephony call signal or data in various forms according to transmission and reception of text/multimedia messages.

The wireless Internet module 113 may correspond to a module for wireless Internet access and may be included in the mobile terminal 100 or may be externally attached to the mobile terminal 100. Wireless LAN (WLAN or Wi-Fi), wireless broadband (Wibro), world interoperability for microwave access (Wimax), high speed downlink packet access (HSDPA) and so on may be used as a wireless Internet technique.

The short range communication module 114 may correspond to a module for short range communication. Further, Bluetooth®, radio frequency identification (RFID), infrared data association (IrDA), ultra wideband (UWB) and/or ZigBee® may be used as a short range communication technique.

The location information module 115 may confirm or obtain a location or a position of the mobile terminal 100. The location information module 115 may obtain position information by using a global navigation satellite system (GNSS). The GNSS is a terminology describing a radio navigation satellite system that revolves around the earth and transmits reference signals to predetermined types of radio navigation receivers such that the radio navigation receivers can determine their positions on the earth's surface or near the earth's surface. The GNSS may include a global positioning system (GPS) of the United States, Galileo of Europe, a global orbiting navigational satellite system (GLONASS) of Russia, COMPASS of China, and a quasi-zenith satellite system (QZSS) of Japan, for example.

A global positioning system (GPS) module is a representative example of the location information module 115. The GPS module may calculate information on distances between one point or object and at least three satellites and information on a time when distance information is measured and apply trigonometry to the obtained distance information to obtain three-dimensional position information on the point or object according to latitude, longitude and altitude at a predetermined time.

A method of calculating position and time information using three satellites and correcting the calculated position and time information using another satellite may also be used. Additionally, the GPS module may continuously calculate a current position in real time and calculate velocity information using the location or position information.

The A/V input unit 120 may input (or receive) an audio signal and/or a video signal. The A/V input unit 120 may include a camera 121 and a microphone 122. The camera 121 may process image frames of still images or moving images obtained by an image sensor in a video telephony mode or a photographing mode. The processed image frames may be displayed on a display 151, which may be a touch screen.

The image frames processed by the camera 121 may be stored in the memory 160 or may be transmitted to an external device through the wireless communication unit 110. The mobile terminal 100 may also include at least two cameras 121.

The microphone 122 may receive an external audio signal in a call mode, a recording mode and/or a speech recognition mode, and the microphone 122 may process the received audio signal into electric audio data. The audio data may then be converted into a form that can be transmitted to a mobile communication base station through the mobile communication module 112 and output in the call mode. The microphone 122 may employ various noise removal algorithms (or noise canceling algorithm) for removing or reducing noise generated when the external audio signal is received.

The user input unit 130 may receive input data for controlling operation of the mobile terminal 100 from a user. The user input unit 130 may include a keypad, a dome switch, a touch pad (constant voltage/capacitance), a j og wheel, a j og switch and/or so on.

The sensing unit 140 may sense a current state of the mobile terminal 100, such as an open/close state of the mobile terminal 100, a position of the mobile terminal 100, whether a user touches the mobile terminal 100, a direction of the mobile terminal 100, and acceleration/deceleration of the mobile terminal 100, and the sensing unit 140 may generate a sensing signal for controlling operation of the mobile terminal 100. For example, in an example of a slide phone, the sensing unit 140 may sense whether the slide phone is opened or closed. Further, the sensing unit 140 may sense whether the power supply 190 supplies power and/or whether the interface 170 is connected to an external device. The sensing unit 140 may also include a proximity sensor 141 and a posture detection sensor 142. The sensing unit 140 may sense a motion of the mobile terminal 100.

The output unit 150 may generate visual, auditory and/or tactile output, and the output unit 150 may include the display 151, an audio output module 152, an alarm 153 and a haptic module 154. The display 151 may display information processed by the mobile terminal 100. The display 151 may display a user interface (UI) and/or a graphic user interface (GUI) related to a telephone call when the mobile terminal 100 is in the call mode. The display 151 may also display a captured and/or received image, a UI or a GUI when the mobile terminal 100 is in the video telephony mode or the photographing mode.

The display 151 may include at least one of a liquid crystal display, a thin film transistor liquid crystal display, an organic light-emitting diode display, a flexible display and/or a three-dimensional display. The display 151 may be of a transparent type or a light transmissive type. That is, the display 151 may include a transparent display.

The transparent display may be a transparent liquid crystal display. A rear structure of the display 151 may also be of a light transmissive type. Accordingly, a user may see an object located behind the body (of the mobile terminal 100) through the transparent area of the body of the mobile terminal 100 that is occupied by the display 151.

The mobile terminal 100 may also include at least two displays 151. For example, the mobile terminal 100 may include a plurality of displays 151 that are arranged on a single face at a predetermined distance or integrated displays. The plurality of displays 151 may also be arranged on different sides.

When the display 151 and a sensor sensing touch (hereafter referred to as a touch sensor) form a layered structure that is referred to as a touch screen, the display 151 may be used as an input device in addition to an output device. The touch sensor may be in the form of a touch film, a touch sheet, and/or a touch pad, for example.

The touch sensor may convert a variation in pressure applied to a specific portion of the display 151 or a variation in capacitance generated at a specific portion of the display 151 into an electric input signal. The touch sensor may sense pressure of touch as well as position and area of the touch.

When the user applies a touch input to the touch sensor, a signal corresponding to the touch input may be transmitted to a touch controller. The touch controller may then process the signal and transmit data corresponding to the processed signal to the controller 180. Accordingly, the controller 180 may detect a touched portion of the display 151.

The proximity sensor 141 of the sensing unit 140 may be located in an internal region of the mobile terminal 100, surrounded by the touch screen, and/or near the touch screen. The proximity sensor 141 may sense an object approaching a predetermined sensing face or an object located near the proximity sensor 141 using an electromagnetic force or infrared rays without having mechanical contact. The proximity sensor 141 may have a lifetime longer than a contact sensor and may thus have a wide application in the mobile terminal 100.

The proximity sensor 141 may include a transmission type photo-electric sensor, a direct reflection type photo-electric sensor, a mirror reflection type photo-electric sensor, a highfrequency oscillating proximity sensor, a capacitive proximity sensor, a magnetic proximity sensor, and/or an infrared proximity sensor. A capacitive touch screen may be constructed such that proximity of a pointer is detected through a variation in an electric field according to the proximity of the pointer. The touch screen (touch sensor) may be classified as a proximity sensor 141.

For ease of explanation, an action of the pointer approaching the touch screen without actually touching the touch screen may be referred to as a proximity touch and an action of bringing the pointer into contact with the touch screen may be referred to as a contact touch. The proximity touch point of the pointer on the touch screen may correspond to a point of the touch screen at which the pointer is perpendicular to the touch screen.

The proximity sensor 141 may sense the proximity touch and a proximity touch pattern (e.g., a proximity touch distance, a proximity touch direction, a proximity touch velocity, a proximity touch time, a proximity touch position, a proximity touch moving state, etc.). Information corresponding to the sensed proximity touch action and proximity touch pattern may then be displayed on the touch screen. The posture detection sensor 142 can detect a user's hand gesture for performing a specific command.

The audio output module 152 may output audio data received from the wireless communication unit 110 or stored in the memory 160 in a call signal receiving mode, a telephone call mode or a recording mode, a speech recognition mode and a broadcasting receiving mode. The audio output module 152 may output audio signals related to functions, such as a call signal incoming tone and a message incoming tone, performed in the mobile terminal 100. The audio output module 152 may include a receiver, a speaker, a buzzer, and/or the like. The audio output module 152 may output sounds through an earphone jack. The user may hear the sounds by connecting an earphone to the earphone jack.

The alarm 153 may output a signal for indicating generation of an event of the mobile terminal 100. For example, an alarm may be generated when receiving a call signal, receiving a message, inputting a key signal, and/or inputting a touch. The alarm 153 may also output signals in forms different from video signals or audio signals, for example, a signal for indicating generation of an event through vibration. The video signals and/or the audio signals may also be output through the display 151 or the audio output module 152.

The haptic module 154 may generate various haptic effects that the user can feel. One example of the haptic effects is vibration. An intensity and/or pattern of vibration generated by the haptic module 154 may also be controlled. For example, different vibrations may be combined and output or may be sequentially output.

The haptic module 154 may generate a variety of haptic effects including an effect of stimulus according to an arrangement of pins vertically moving against a contact skin surface, an effect of stimulus according to a jet force or sucking force of air through a jet hole or a sucking hole, an effect of stimulus of rubbing the skin, an effect of stimulus according to contact of an electrode, an effect of stimulus using an electrostatic force, and an effect according to a reproduction of cold and warmth using an element capable of absorbing or radiating heat in addition to vibrations.

The haptic module 154 may not only transmit haptic effects through direct contact but may also allow the user to feel haptic effects through a kinesthetic sense of the user's fingers or arms. The mobile terminal 100 may also include a plurality of haptic modules 154.

The memory 160 may store a program for operations of the controller 180 and/or temporarily store input/output data such as a phone book, messages, still images, and/or moving images. The memory 160 may also store data about vibrations and sounds in various patterns that are output from when a touch input is applied to the touch screen.

The memory 160 may include at least a flash memory, a hard disk type memory, a multimedia card micro type memory, a card type memory, such as SD or XD memory, a random access memory (RAM), a static RAM (SRAM), a read-only memory (ROM), an electrically erasable programmable ROM (EEPROM), a programmable ROM (PROM) magnetic memory, a magnetic disk and/or an optical disk. The mobile terminal 100 may also operate in relation to a web storage that performs a storing function of the memory 160 on the Internet.

The interface 170 may serve as a path to external devices connected to the mobile terminal 100. The interface 170 may receive data from the external devices or power and transmit the data or power to internal components of the mobile terminal 100 or transmit data of the mobile terminal 100 to the external devices. For example, the interface 170 may include a wired/wireless headset port, an external charger port, a wired/wireless data port, a memory card port, a port for connecting a device having a user identification module, an audio I/O port, a video I/O port, and/or an earphone port.

The interface 170 may also interface with a user identification module that is a chip that stores information for authenticating authority to use the mobile terminal 100. For example, the user identification module may be a user identify module (UIM), a subscriber identify module (SIM) and/or a universal subscriber identify module (USIM). An identification device (including the user identification module) may also be manufactured in the form of a smart card. Accordingly, the identification device may be connected to the mobile terminal 100 through a port of the interface 170.

The interface 170 may also be a path through which power from an external cradle is provided to the mobile terminal 100 when the mobile terminal 100 is connected to the external cradle or a path through which various command signals input by the user through the cradle are transmitted to the mobile terminal 100. The various command signals or power input from the cradle may be used as signals for confirming whether the mobile terminal 100 is correctly set in the cradle.

The controller 180 may control overall operations of the mobile terminal 100. For example, the controller 180 may perform control and processing for voice communication, data communication and/or video telephony. The controller 180 may also include a multimedia module 181 for playing multimedia. The multimedia module 181 may be included in the controller 180 or may be separated from the controller 180.

The controller 180 may perform a pattern recognition process capable of recognizing handwriting input or picture-drawing input applied to the touch screen as characters or images. The power supply 190 may receive external power and internal power and provide power required for operations of the components of the mobile terminal 100 under control of the controller 180.

According to hardware implementation, embodiments may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and/or electrical units for executing functions. Embodiments may be implemented by the controller 180.

According to software implementation, embodiments such as procedures or functions may be implemented with a separate software module that executes at least one function or operation. Software codes may be implemented according to a software application written in an appropriate software language. The software codes may be stored in the memory 160 and executed by the controller 180.

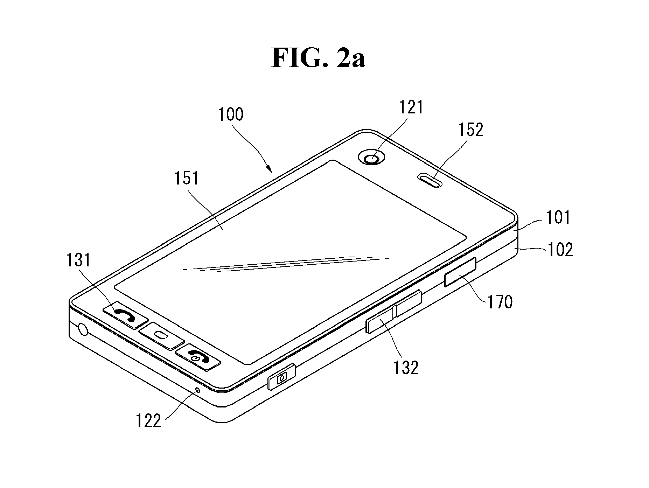

FIG. 2A is a front perspective view of a mobile terminal (or a handheld terminal) according to an embodiment.

The mobile terminal 100 may be a bar type terminal body. However, embodiments are not limited to a bar type terminal and may be applied to terminals of various types including slide type, folder type, swing type and/or swivel type terminals having at least two bodies that are relatively movably combined.

The terminal body may include a case (a casing, a housing, a cover, etc.) that forms an exterior of the mobile terminal 100. In this embodiment, the case may be divided into a front case 101 and a rear case 102. Various electronic components may be arranged in the space formed between the front case 101 and the rear case 102. At least one middle case may be additionally provided between the front case 101 and the rear case 102.

The cases may be formed of plastics through injection molding or made of a metal material such as stainless steel (STS) or titanium (Ti).

The display 151, the audio output unit 152, the camera 121, the user input unit 130/131 and 132, the microphone 122 and the interface 170 may be arranged (or provided) in the terminal body, and more specifically may be arranged (or provided) in the front case 101.

The display 151 may occupy most of the main face of the front case 101. The audio output unit 152 and the camera 121 may be arranged in a region in proximity to one of both ends of the display 151 and the user input unit 131, and the microphone 122 may be located in a region in proximity to another end of the display 151. The user input unit 132 and the interface 170 may be arranged (or provided) on sides of the front case 101 and the rear case 102.

The user input unit 130 may receive commands for controlling operation of the mobile terminal 100, and may include a plurality of operating units 131 and 132. The operating units 131 and 132 may be referred to as manipulating portions and may employ any tactile manner in which a user operates the operating units 131 and 132 while having tactile feeling.

The first and second operating units 131 and 132 may receive various inputs. For example, the first operating unit 131 may receive commands such as start, end and scroll and the second operating unit 132 may receive commands such as control of a volume of sound output from the audio output unit 152 or conversion of the display 151 to a touch recognition mode.

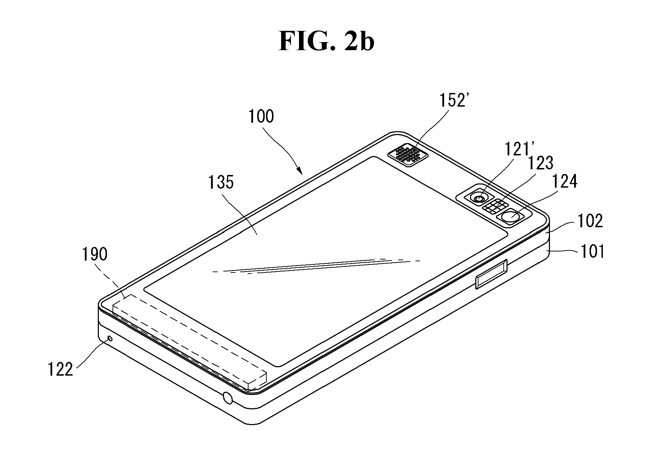

FIG. 2B is a rear perspective view of the mobile terminal (shown in FIG. 2A) according to an embodiment.

Referring to FIG. 2A, a camera 121' may be additionally attached to the rear side of the terminal body (i.e., the rear case 102). The camera 121' may have a photographing direction opposite to that of the camera 121 (shown in FIG. 2A) and may have pixels different from those of the camera 121 (shown in FIG. 2A).

For example, it may be desirable that the camera 121 has low pixels such that the camera 121 may capture an image of a face of a user and transmit the image to a receiving part in case of video telephony while the camera 121' has high pixels because the camera 121' captures an image of a general object and does not immediately transmit the image in many cases. The cameras 121 and 121' may be attached (or provided) to the terminal body such that the cameras 121 and 121' may rotate or pop-up.

A flash bulb 123 and a mirror 124 may be additionally provided in proximity to the camera 121'. The flash bulb 123 may light an object when the camera 121' takes a picture of the object. The mirror 124 may be used for the user to look at his/her face in the mirror when the user wants to self-photograph himself/herself using the camera 121'.

An audio output unit 152' may be additionally provided on the rear side of the terminal body. The audio output unit 152' may achieve a stereo function with the audio output unit 152 (shown in FIG. 2A) and may be used for a speaker phone mode when the terminal is used for a telephone call.

A broadcasting signal receiving antenna may be additionally attached (or provided) to the side of the terminal body in addition to an antenna for telephone calls. The antenna constructing a part of the broadcasting receiving module 111 (shown in FIG. 1) may be set in the terminal body such that the antenna may be pulled out of the terminal body.

The power supply 190 for providing power to the mobile terminal 100 may be set in the terminal body. The power supply 190 may be included in the terminal body or may be detachably attached to the terminal body.

A touch pad 135 for sensing touch may be attached to the rear case 102. The touch pad 135 may be of a light transmission type, such as the display 151. In this example, if the display 151 outputs visual information through both sides thereof, the visual information may be recognized (or determined) by the touch pad 135. The information output through both sides of the display 151 may be controlled by the touch pad 135. Otherwise, a display may be additionally attached (or provided) to the touch pad 135 such that a touch screen may be arranged (or provided) even in the rear case 102.

The touch pad 135 may operate in connection with the display 151 of the front case 101. The touch pad 135 may be located in parallel with the display 151 behind the display 151. The touch panel 135 may be identical to or smaller than the display 151 in size.

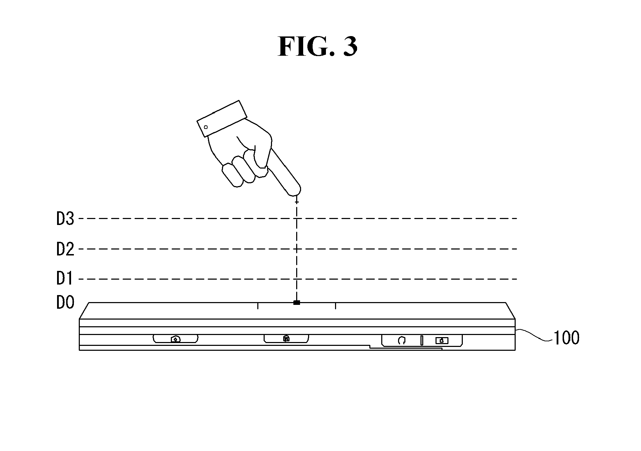

FIG. 3 shows a section of the touch screen in which proximity sensors capable of sensing three proximity depths may be provided. Proximity sensors capable of sensing less than three or more than four proximity depths may be provided in the touch screen.

More specifically, when the pointer completely contacts the touch screen (D0), it may be recognized as contact touch. When the pointer is located within a distance D1 from the touch screen, it may be recognized as a proximity touch of a first proximity depth. When the pointer is located in a range between the distance D1 and a distance D2 from the touch screen, it may be recognized as a proximity touch of a second proximity depth. When the pointer is located in a range between the distance D2 and a distance D3 from the touch screen, it may be recognized as a proximity touch of a third proximity depth. When the pointer is located greater than the distance D3 from the touch screen, it may be recognized as cancellation of the proximity touch.

Accordingly, the controller 180 may recognize the proximity touch as various input signals according to proximity distance and proximity position of the pointer with respect to the touch screen, and the controller 810 may perform various operation controls according to the input signals.

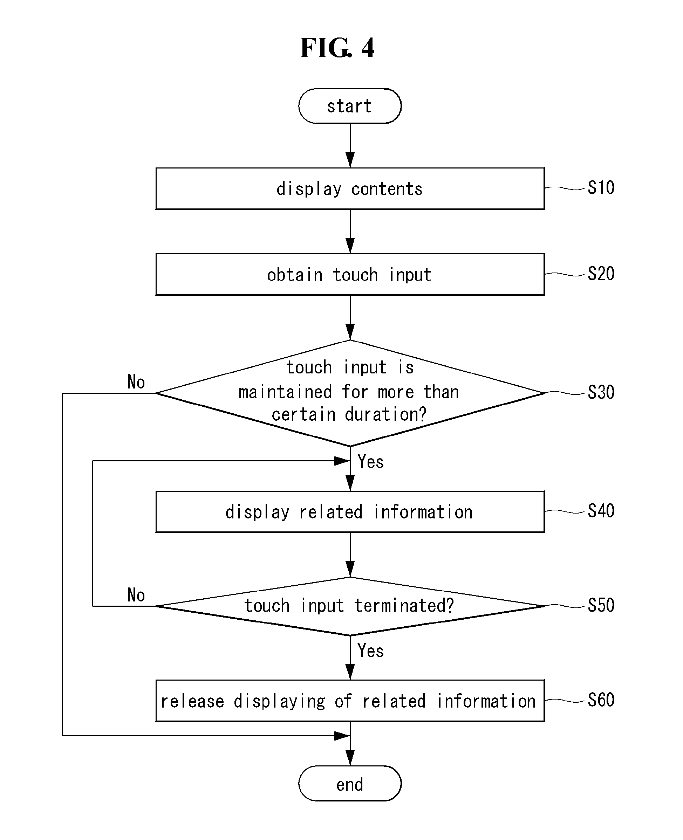

FIG. 4 is a flow chart illustrating an operation of the mobile terminal according to an embodiment of the present invention. As shown in FIG. 4, the controller 180 displays information related to contents displayed according to a user's touch input. Since the controller 180 displays the information related to the contents, user required information can be obtained without an additional manipulation of the mobile terminal 100.

Further, the controller 180 performs a step (S10) of displaying contents. Contents may be various types of data output by the mobile terminal 100. For example, contents may be data stored in the memory 160 of the mobile terminal 100.

There also can be various contents. For example, contents may include an icon of an application displayed on a background screen, a message, a contact number, a call list, (Social Network Service) particulars, a Web page, a picture and/or photograph, and the like. The contents can be displayed on the display 151 according to a control signal from the controller 180 and/or a user selection.

A step (S20) of obtaining a touch input and a step (S30) of determining whether or not a touch input has been maintained for more than a certain time are also performed. In more detail, the touch input may be an operation of a user's direct touch on the display 151 or a proximity touch. The touch input may be a touch input with respect to a particular spot (or a particular point) of the display 151, a drag generated as a touch is moved by a certain distance after a particular spot of the display 151 is touched, a flicking touch input, or the like. Drag and flicking are common in that a touch, starting from one spot, is continued to move to a different spot. However, flicking is a touch input which moves faster than drag. Hereinafter, the expression of drag covers the meaning of flicking unless otherwise discriminated.

A touch input may also be a long touch input and/or a touch drag input with respect to a particular spot. Namely, a touch input may be a touch input which continues for more than a certain time. When a user's touch input is obtained, the controller 180 checks a duration of the corresponding touch input (S30). The controller 180 can determine whether or not the corresponding touch input is a touch input maintained for more than a certain time.

When a user's touch input is obtained, the controller 180 may determine whether or not the corresponding touch input is a touch drag. For example, when a touch is applied to a particular spot of the display 151 and is moved in position so as to be continued, the controller 180 may determine that a touch drag input has been performed. When the touch drag input is performed, the controller 180 may determine that the touch input has continued for more than a certain time.

When the touch input is maintained for more than a certain time (Yes in S30), the controller 180 displays related information (S40). The related information may be information related to displayed contents. For example, the related information may be an expression of additional information with respect to the displayed contents, a highlighted expression with respect to a corresponding portion to increase a user recognition for at least a portion among the displayed contents, an expression of dimming a corresponding portion to reduce a user recognition with respect to at least a portion of the displayed contents, or the like. Examples of the related information will be described in more detail later.

Further, the controller 180 performs a step (S50) of determining whether or not the touch input has been terminated, and a step (S60) of releasing displaying of the related information. Terminating of the touch input refers to an operation of terminating a physical touch with respect to the touch screen 151 or an operation of separating the user's finger, or the like, which is in proximity of the touch screen 151, from the touch screen 151 by more than a certain distance.

When the touch input is terminated (Yes in S50), the controller 180 releases or stops displaying the information related to the displayed contents. Further, the related information may be associated with the presence of absence of a touch input. For example, when a touch input is conducted, related information may be displayed, and when the touch input is terminated, the related information may not be displayed.

Because the related information is displayed in association with a touch input, an additional manipulation is not required to view the related information. For example, while a touch drag operation is being performed, an execution state of an application is displayed, and then, when the touch drag operation is terminated, the displayed execution state of an application disappears.

In addition, because an execution state of an application as related information is displayed while the touch drag operation for turning over a page is being performed, the user can obtain useful information without having to perform an additional touch operation. In addition, since the related information is displayed and then disappears during the touch drag operation, a phenomenon that the contents itself is covered by the related information is prevented.

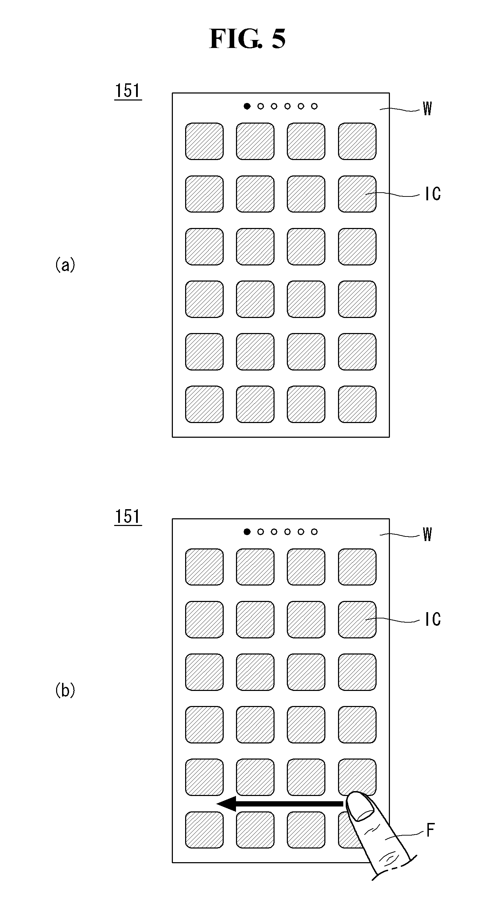

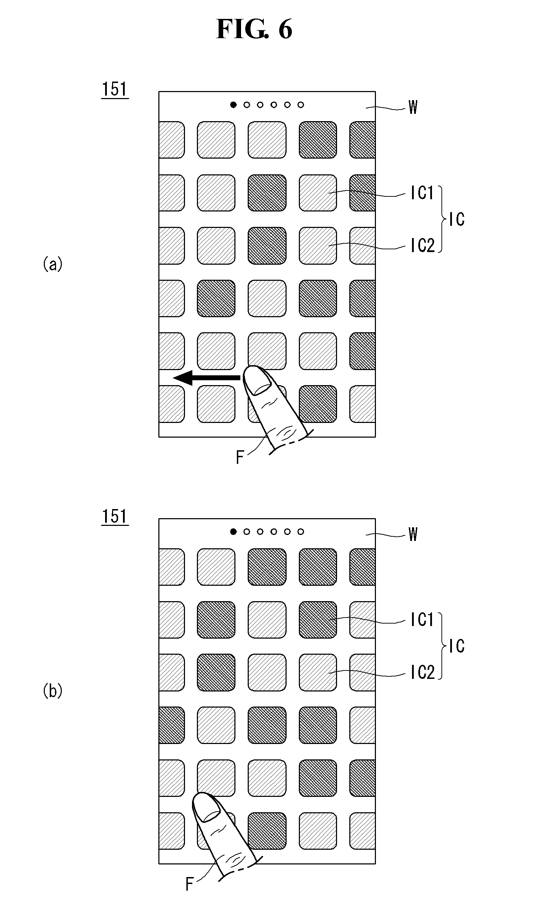

Next, FIGS. 5 and 6 are views showing a process of displaying related information of the mobile terminal according to an embodiment of the present invention. As shown in FIGS. 5 and 6, the mobile terminal 100 displays information regarding contents while user's touch operation is being performed.

In more detail, as shown in FIG. 5(a), a background image W of the mobile terminal 100 is displayed on the display 151. A plurality of icons IC is also displayed on the background image W. When an icon IC is selected, an application is executed. The icons IC disposed on the background image W may be contents related to an operation of the mobile terminal 100.

The background image W may include a plurality of pages. For example, the icons IC displayed on FIG. 5(a) may be a group of icons displayed on a first page, and another group of icons IC may be disposed on a second page.

As shown In FIG. 5(b), the user may touch a particular spot of the background screen W by their finger F, or the like, and then, perform a touch and drag operation. When the user's touch and drag operation is input, the controller 180 may change a page displayed on the display according to a corresponding direction to display a different page. For example, when a second page is being displayed, a first page or a third page may be displayed according the direction of the touch drag operation.

As shown in FIG. 6(a), when a touch and drag operation using a finger F, or the like, is input, information related to an icon IC as contents may be displayed while the touch operation is being input. For example, according to the touch operation, icons may be differentiated such that an icon IC1 whose display state is changed and a second icon IC2 whose display state is not changed are displayed. The first icon IC1 whose state has been changed may reflect a state of an application as contents related to the corresponding icon IC. It means that, for example, an application corresponding to the first icon IC1 is being executed.

The first icon IC1 whose state has been changed may be displayed while a touch operation by the finger F, or the like, is being performed. Namely, when the user performs a touch drag operation to turn over the background image W, the displayed state of the first icon IC1 may be changed even without a touch operation. Thus, the user can recognize intuitively that the application related to the first icon IC1 is executed as a current background state, or the like.

As shown in FIG. 6(b), when a touch and drag operation using the finger F, or the like, is performed, a page of the background image W may be changed accordingly, and the controller 180 may move the icons accordingly.

When the touch drag operation is terminated, the changed display state in the form of the first icon IC1 may disappear. Namely, all the icons IC may be expressed in the original form of the second icon IC2. Thus, a visual field of the user using the mobile terminal is not interfered with by the first icon IC1.

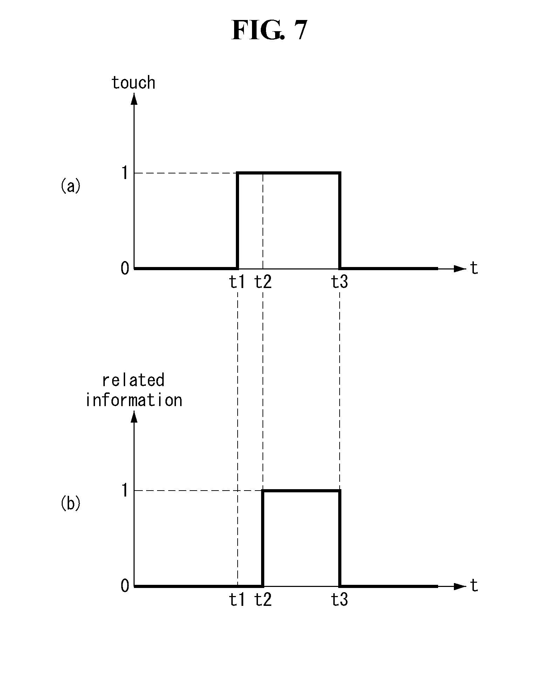

Next, FIG. 7 is a view showing a touch input for displaying related information of the mobile terminal. As shown in FIG. 7, the mobile terminal according to an embodiment of the present invention can display related information of contents according to a user's touch input.

In more detail, as shown in FIG. 7(a), the user performs a touch operation at a point in time t1. The touch operation performed at the point in time t1 is maintained up to a point in time t3. For example, a particular spot may be continuously touched up to the point in time t3, or the touch is maintained through drag or flicking. The touch operation performed at the point in time t1 may be a continuous touch operation exceeding a pre-set certain duration at a point in time t2. Namely, it means that the touch operation is continued to pass a threshold duration at the point in time t2.

As shown in FIG. 7(b), when the pre-set duration has passed, the controller 180 can display related information at the point in time t2. Namely, when the touch operation is input, the controller 180 can count a duration in which the touch operation has been performed, to determine whether or not the threshold value has passed. When the threshold value has passed, the controller 180 can display the related information starting from the point in time t2.

When the touch operation is released at t3, the controller 180 can release the displayed state of the related information at the point in time t3. Namely, when the user stops the touch operation, the displaying of the related information is also stopped at the corresponding point in time. Since the related information is displayed together with the touch operation and the displaying of the related information is released together with a halt of the touch operation, information regarding the contents can be effectively transferred to the user.

In the foregoing embodiment, the related information is displayed according to the extent of time during which a touch operation is performed has been described. However, it may be a value corresponding to a drag or flicking distance. For example, starting from a point in time at which a touch is applied to a particular spot, how long the touch has been moved is determined, and then, when the movement distance of the touch operation exceeds a certain extent, the related information is displayed.

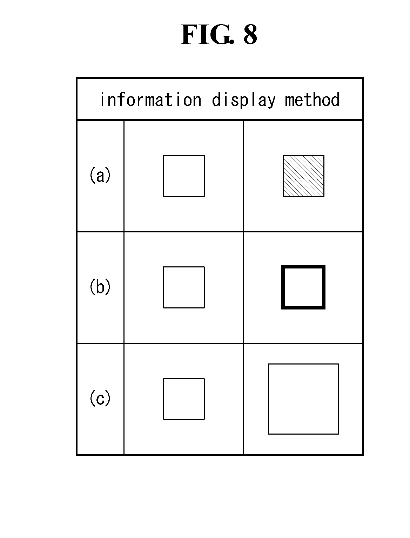

Next, FIG. 8 is a view showing a method for displaying related information of the mobile terminal. As shown in FIG. 8, the controller 180 of the mobile terminal 100 according to an embodiment of the present invention may express the related information itself and/or content thereof in various manners.

As shown in FIG. 8(a), the controller 180 can display information by changing a color of an icon. For example, the controller 180 may change a normal color at usual times to a particular color to thus allow the user to recognize that there is information in relation to the corresponding icon. In addition, additional information may be displayed on an icon to specifically express content of the related information.

As shown in FIG. 8(b), the controller 180 can highlight outer edges of an icon to indicate whether or not there is information. For example, outer edges of an icon may be highlighted by a thick line to inform the user that there is related information. As shown in FIG. 8(c), the controller 180 can change the size of an icon to indicate whether or not there is information. When the size of an icon is changed, the user may easily recognize that there is information.

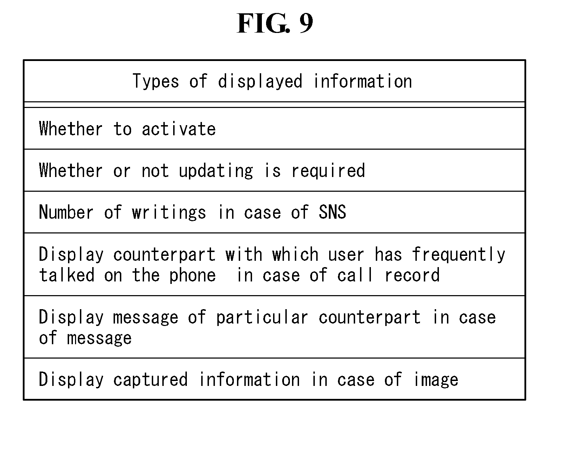

FIG. 9 is a view showing types of information displayed on the mobile terminal. As shown in FIG. 9, the controller 180 of the mobile terminal 100 according to an embodiment of the present invention may display various types of information in relation to the mobile terminal 100.

Displayed information may include information regarding whether or not a particular application is activated. For example, a particular executed and activated application may exist in an activated state in the foreground or background until the controller 180 and/or the user performs a particular manipulation. The controller 180 according to an embodiment of the present invention may display what kind of the activated application it is, during the touch operation. For example, it means that a display state of an icon corresponding to the activated application may be changed.

Displayed information may include information as to whether or not it is required to be updated. For example, a display state of an icon corresponding to an application required to be updated may be changed while the touch operation is being performed to allow the user to easily recognize the necessity of updating the particular application.

Displayed information may also be the number of relevant writings in an SNS (Social Network Service). For example, while a touch operation is being performed, the number of comments or replies in relation to a particular posting of a particular SNS may be displayed. Thus, the number of writings in relation to the display in use can be quickly recognized.

Displayed information may also be displaying of a counterpart with whom the user has frequently talked on the mobile phone (or a counterpart having high frequency of call) in a phone call record. For example, when a touch operation is performed with the phone call record displayed, a counterpart with a high frequency of call may be highlighted to be displayed. Also, when a touch operation is performed with the phone call record displayed, a phone call record in absence may be highlighted to be displayed or a phone call record with a counterpart belonging to a particular group may be highlighted to be displayed.

Displayed information may be displaying of a message of a particular counterpart in a message record. For example, when a touch operation is performed with a message record displayed, a counterpart with whom the user has frequently exchanged messages (or a counterpart having high frequency of message) may be highlighted to be displayed or a message record with a counterpart belonging to a particular group may be highlighted to be displayed.

Displayed information may be displaying of captured information in case of an image. For example, when a touch operation is performed with an image gallery displayed, information such as an image capture place, an image capture time, or the like, of a particular image may be displayed. Also, when a touch operation is performed with an image gallery displayed, a different image related to a particular image may be displayed in a highlighting manner.

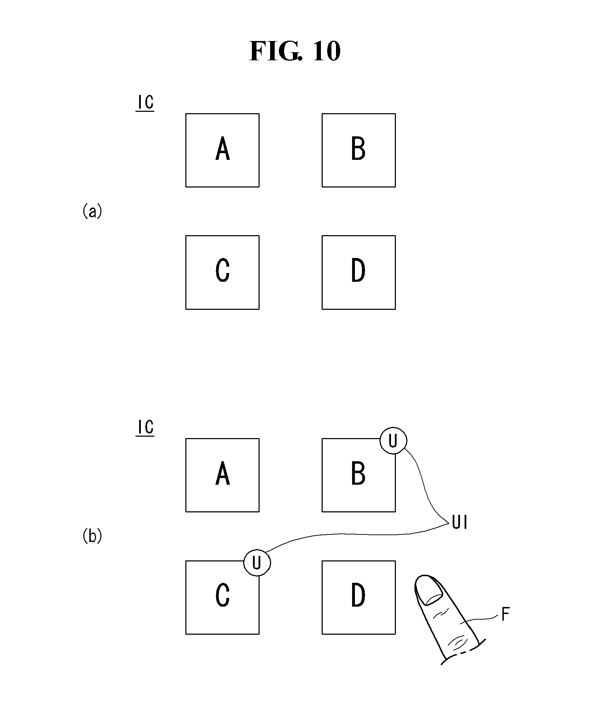

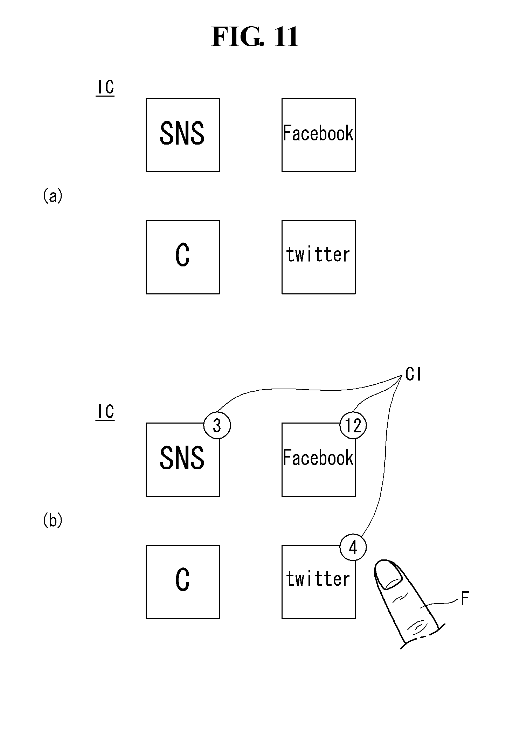

Next, FIGS. 10 and 11 are views showing another method for displaying different related information of the mobile terminal. As shown in FIGS. 10 and 11, the controller 180 according to an embodiment of the present invention may display information related to contents on an icon IC while a touch operation is being performed.

As shown In FIG. 10(a), an icon IC is displayed on the display 151. When a particular touch operation is not performed, the controller 180 displays a general icon IC.

As shown in FIG. 10(b), a touch operation is performed by the finger F, or the like. The touch operation may be a particular touch drag operation to change a page of a background image. When a touch and drag operation is input for a certain period of time or by more than a certain distance, the controller 180 displays information on the icon IC required to be updated. For example, the controller 180 may display an update indicator (UI) on the icons IC required to be updated such that the update indicator (UI) overlaps with the icons IC.

The update indicator UI may be displayed only while a touch operation is being performed. Namely, when the touch operation is terminated, the displayed updated indicator UI may disappear. Thus, the display is less cluttered.

As shown in FIG. 11(a), an icon IC related to SNS is displayed. As shown in FIG. 11(b), when the user performs a particular touch operation, comment indicators CI indicating the number of comments related to the icons IC related to SNS may be displayed. The comment indicators CI disappear when the touch operation is terminated. Thus, the display is less cluttered.

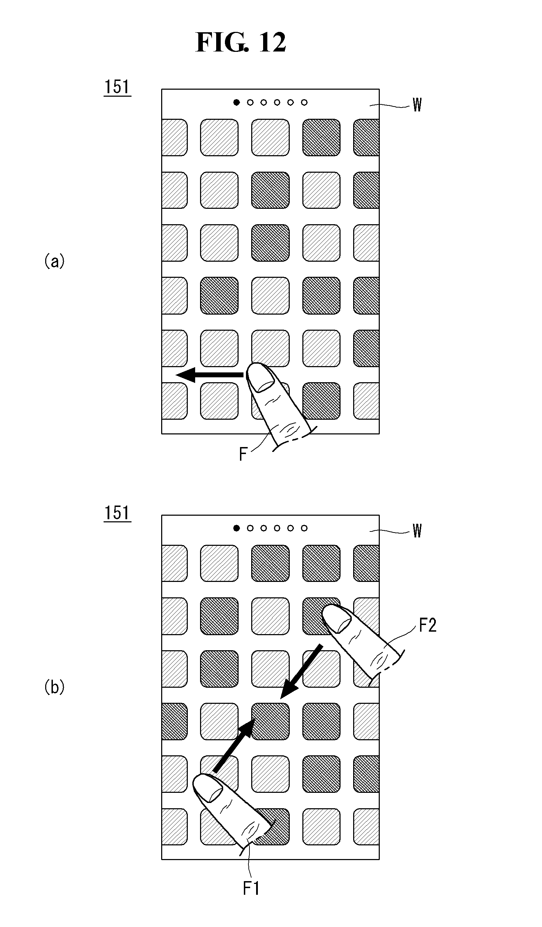

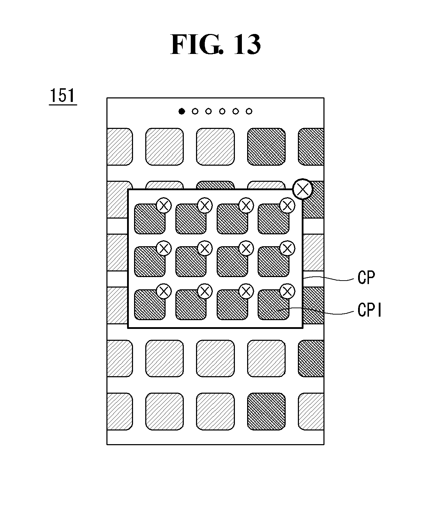

Next, FIGS. 12 and 13 are views showing another method for displaying different related information of the mobile terminal. As shown in FIGS. 12 and 13, the controller 180 according to an embodiment of the present invention provides an environment in which, an activated application is deactivated when a particular touch operation is performed..

As shown in FIG. 12(a), in a state in which a background image W is displayed, the user performs a particular touch operation of dragging by more than a certain time. When the particular touch operation is performed, the controller 180 changes a displayed state of icons corresponding to the currently activated applications and display the icons.

After the touch operation of dragging is performed, the user may perform a hold touch operation of maintaining the touch at a particular spot for more than a certain period of time. When the user performs the touch operation of holding after dragging, the controller 180 maintains the changed display state of the icons corresponding to the activated applications, as it is. For example, a changed display state of the icons corresponding to the activated applications may be maintained even after the touch operation is terminated.

As shown in FIG. 12(b), in a state in which the display state of the icons corresponding to the activated applications has been changed, the user performs a multi-touch operation by using first and second fingers F1 and F2. For example, the user may perform a touch operation in a direction in which his two fingers F1 and F2 pinched inwards.

As shown in FIG. 13, according to the user's multi-touch operation, the controller 180 displays a pop-up window CP for stopping the execution of the application being executed at a time. For example, when a particular spot of the pop-up window CP is selected, the execution of the applications corresponding to the icons included in the pop-up window may be stopped. In addition, a halt icon CPI included in the pop-up window CP may be selected to individually stop the applications.

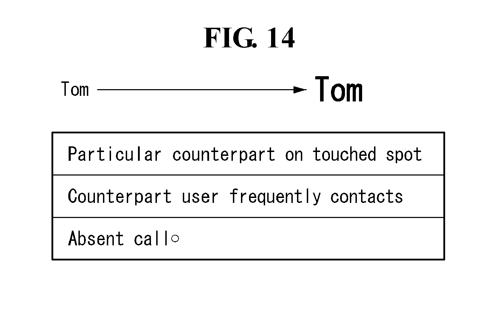

Next, FIGS. 14 to 20 are views showing another method for displaying different related information of the mobile terminal As shown in FIGS. 14 to 20, the controller 180 according to an embodiment of the present invention displays a particular portion of contents in a magnified manner to express information related to the contents.

As shown in FIG. 14, when a particular counterpart of a touched spot in a displayed contact number, a counterpart the user frequently contacts, and a counterpart of an absent call, and the like, is "Tom", corresponding letters may be magnified to be displayed. Namely, when a particular touch input according to an embodiment of the present invention is performed, at least a portion of corresponding contents may be displayed discriminately.

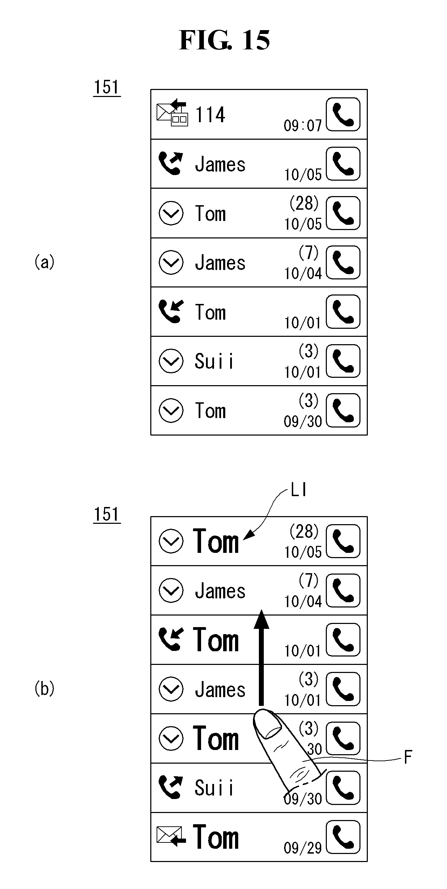

As shown in FIG. 15(a), a list is displayed on the display 151. The list may be contents generated in various situations. For example, the list may be contents including a list of calls, messages, e-mails, and the like, exchanged with different users. With the list contents displayed, the user may touch one point to perform a touch operation of dragging in a particular direction. For example, the user may perform a touch operation such that the call list is scrolled upwardly or downwardly.

As shown in FIG. 15(b), when the user's particular touch operation is input, the controller 180 may display a particular counterpart LI in a magnified manner. For example, the name of the counterpart LI corresponding to a spot touched by the user may be magnified to be displayed. Thus, the user can easily check the counterpart LI corresponding to the touched spot.

The particular counterpart LI may be determined to be a counterpart corresponding to the spot from which the touch operation starts as mentioned above, or may also be determined according to contact frequency. For example, when a touch operation is performed on the call list, the name of the counterpart having high call frequency may be magnified to be displayed. In addition, the conditions in which, for example, a counterpart is magnified to be displayed may be set beforehand.

When the touch operation is terminated, the controller 180 may return the magnified name of the counterpart LI into the original state and display the same.

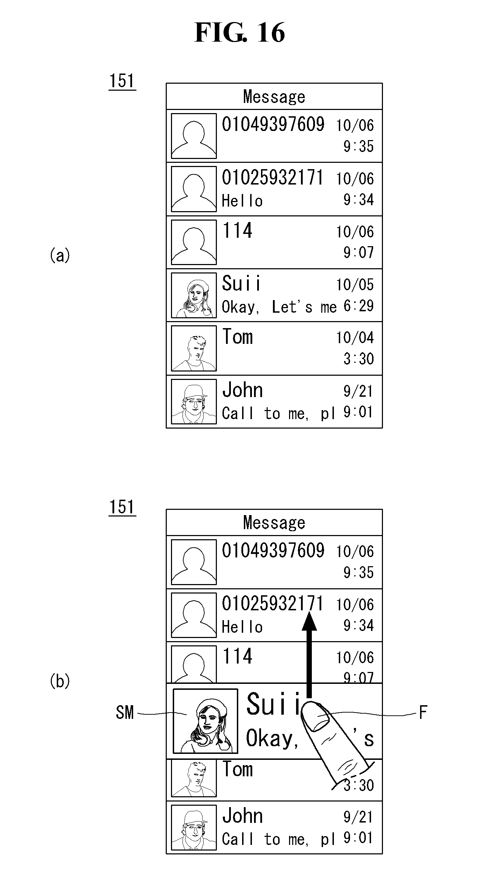

As shown in FIG. 16(a), a message list including messages exchanged with different users may be displayed on the display 151. The message list may include a plurality of items in which names, phone numbers, and the like, of respective counterparts, are displayed.

As shown in FIG. 16(b), the user performs an operation of touching the message list with their finger F, or the like. For example, the user may perform a touch operation of touching a particular spot and then dragging.

While the user performs the touch operation of dragging, the controller 180 displays a particular message SM in a magnified manner accordingly. The particular message SM may be a message present at a spot from which the user's touch operation has started, or a message with a counterpart having relatively high frequency. For example, the messages exchanged with the counterpart of the message present at the spot from which the touch operation starts may be displayed in a highlighted manner. Since the message SM exchanged with a particular counterpart is highlighted to be displayed, the user can easily search desired information.

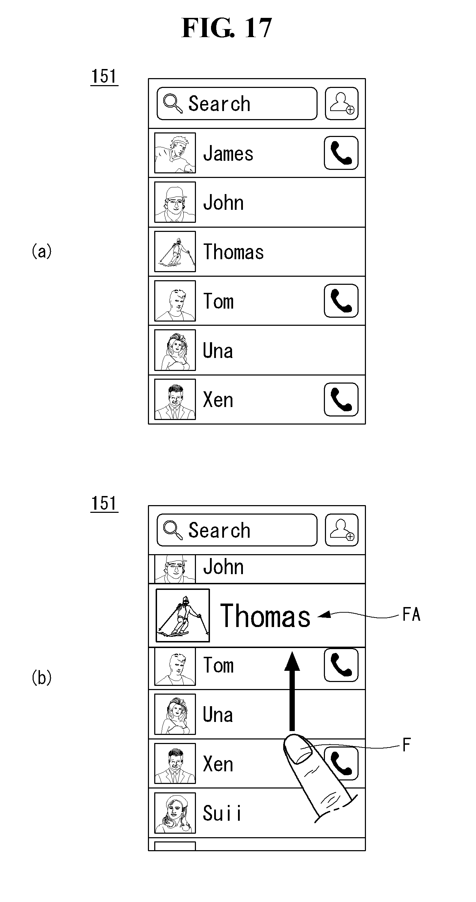

As shown in FIG. 17(a), a list of contact numbers may be displayed on the display 151. As shown in FIG. 17(b), when the user performs a touch operation, the controller 180 displays a contact number FA of a particular counterpart in an highlighted manner. The contact number FA displayed to be highlighted may be a counterpart with whom the user frequency contacts or a counterpart positioned on a spot from which the user's touch operation has started.

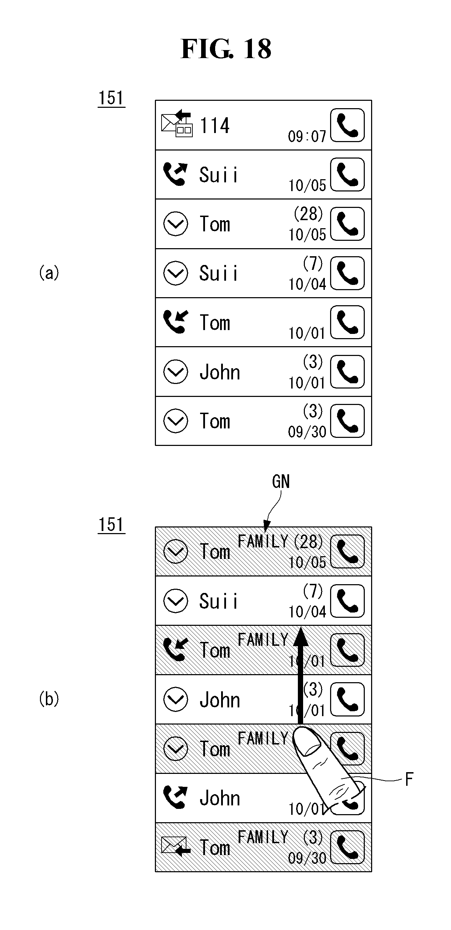

As shown in FIG. 18(a), a list of contact numbers is displayed on the display 151. As shown in FIG. 18(b), when the user's touch operation is input, a group name GN to which a particular counterpart belongs in the list of the contact numbers may be displayed. For example, when a counterpart TOM is selected, FAMILY, as a group name GN, to which Tom belongs may be displayed together. The group name GN may be designated by the user or may be a name grouped through SNS, or the like.

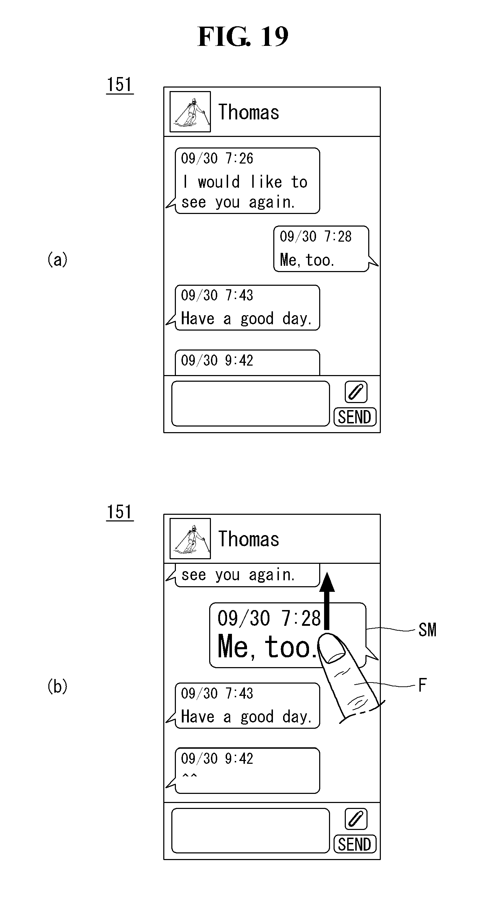

As shown in FIG. 19(a), a list of messages with a particular counterpart is displayed on the display 151, As shown in FIG. 19(b), when the user performs a touch operation, the controller 180 displays a selected particular message SM in a magnified manner. For example, when a user's touch is input, the controller 180 can magnify and display the particular message SM at the spot where the user's touch has started. The magnified message may be returned to an original display state thereof when the user's touch is terminated.

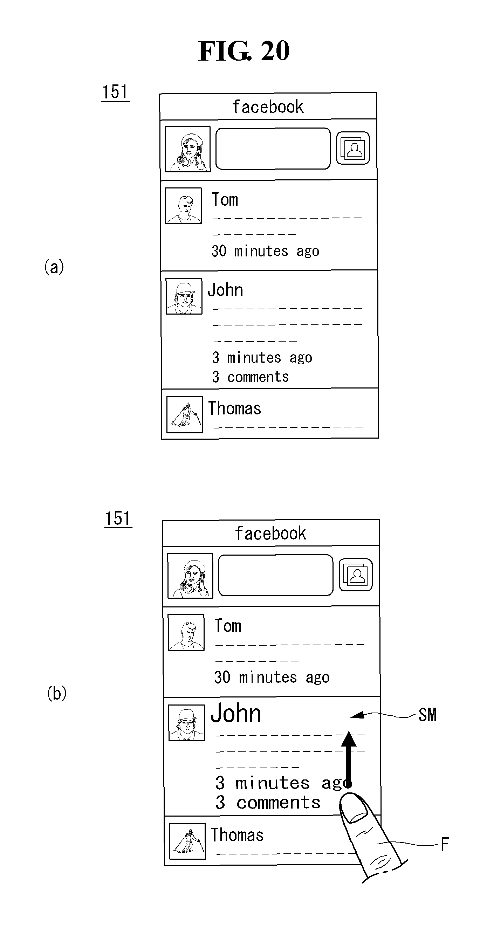

As shown in FIG. 20(a), a message uploaded to SNS is displayed on the display 151. As shown in FIG. 20(b), when a user's touch operation is performed, the controller 180 displays a particular message SM in a highlighted manner. The highlighted particular message SM may be a message from a counterpart with which the user has frequently exchanged messages or a message having a comment added thereto but not checked yet.

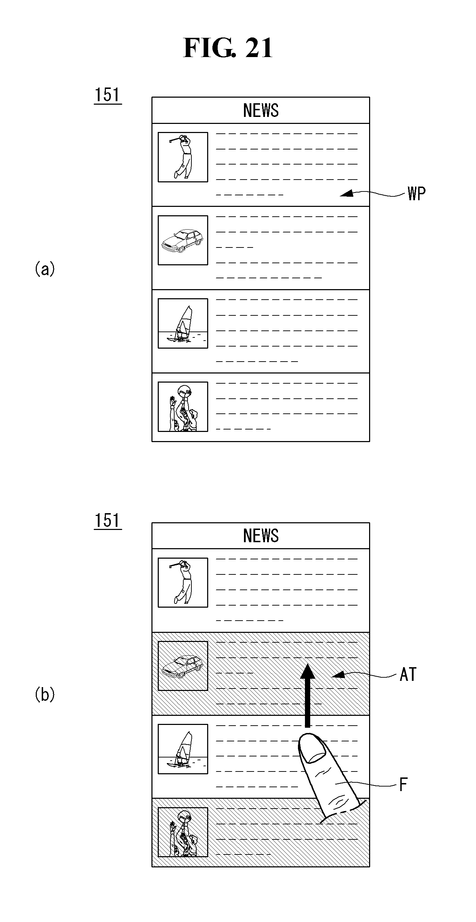

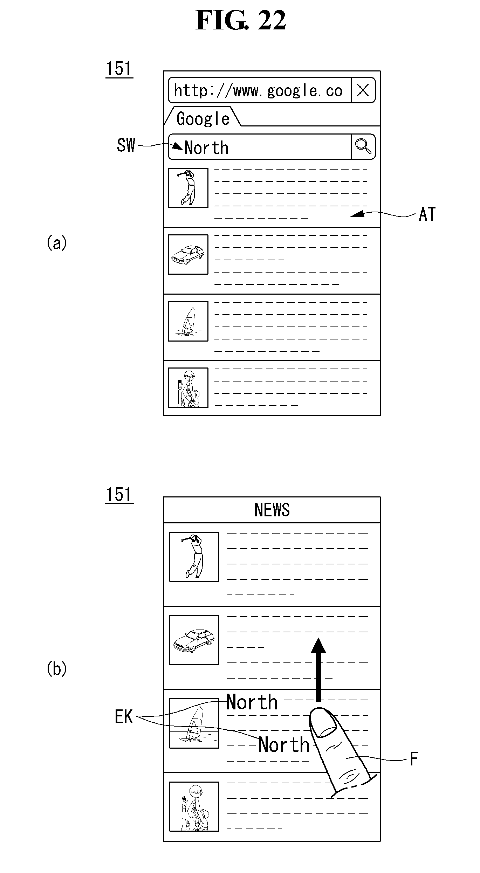

FIGS. 21 and 22 are views showing another method for displaying different related information of the mobile terminal. As shown in FIGS. 21 and 22, the controller 180 according to an embodiment of the present invention can display a particular portion of a displayed Web page in a highlighted manner.

As shown in FIG. 21 (a), a Web page WP is displayed on the display 151. Various types of information may be displayed on the Web page WP. For example, news, various homepages, and the like, may be displayed.

As shown in FIG. 21(b), when a user's touch operation is performed, the controller 180 displays a particular portion of the Web page in a highlighted manner. For example, when Internet news is displayed, a particular article AT part may be highlighted to be displayed. The particular article AT may be highlighted to be displayed only when the user's touch operation is performed. Namely, when the touch operation is terminated, the highlighted display may disappear.

The highlighted particular article AT may be a portion the user has not read. Or, the controller 180 may selectively display an article the user may be interested in. Namely, among a great amount of information, the controller 180 may selectively display only portions the user may be interested in so that the user can effectively perform Web surfing.

As shown in FIG. 22(a), the user can input a particular search word SW. Search results with respect to the particular search word SW are then displayed on the display 151. For example, articles AT corresponding to a search word SW of "North" may be displayed on the display 151.

As shown in FIG. 22(b), the user performs a touch operation. When the touch operation is performed, the controller 180 displays words corresponding to the search word SW in articles in a highlighted manner. The highlighted words may be displayed in their original state when the touch operation is terminated.

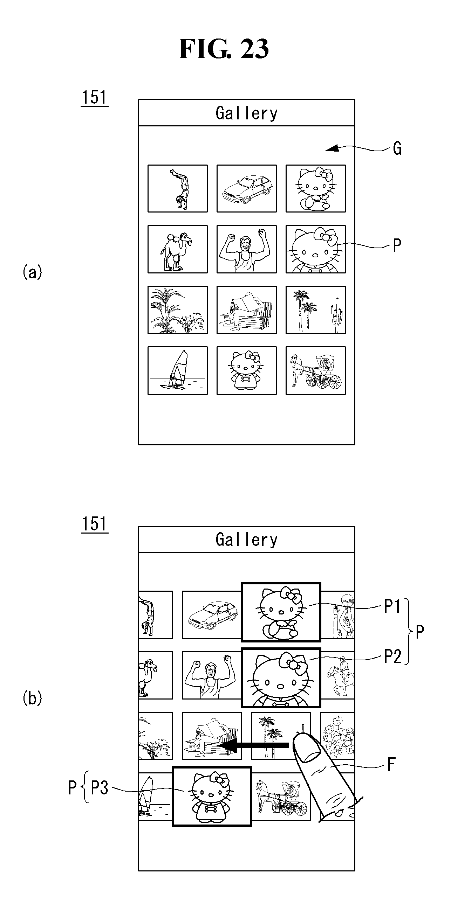

Next, FIGS. 23 to 27 are views showing another method for displaying different related information of the mobile terminal. As shown in FIGS. 23 to 27, the controller 180 according to an embodiment of the present invention displays information related to a displayed image.

As shown in FIG. 23(a), images P are displayed on the display 151. For example, the images P stored in the memory 160 of the mobile terminal 100 may be displayed in a gallery (G) form. As shown in FIG. 23 (b), when the user performs a touch operation, the controller 180 displays particular images P1 to P3, among the displayed images P, in a highlighted manner. When the touch operation is terminated, the particular images P1 to P3 displayed to be highlighted can be returned to their original display state.

The particular images P1 to P3 may be selected based on various conditions. For example, an image P captured at a current location of the mobile terminal may be selectively displayed in a magnified manner. Or, an image P related to an image P on a spot from which a touch operation starts may be selectively displayed in a magnified manner. Or, an image P which has been frequently selected by the user may be selectively displayed in a magnified manner.

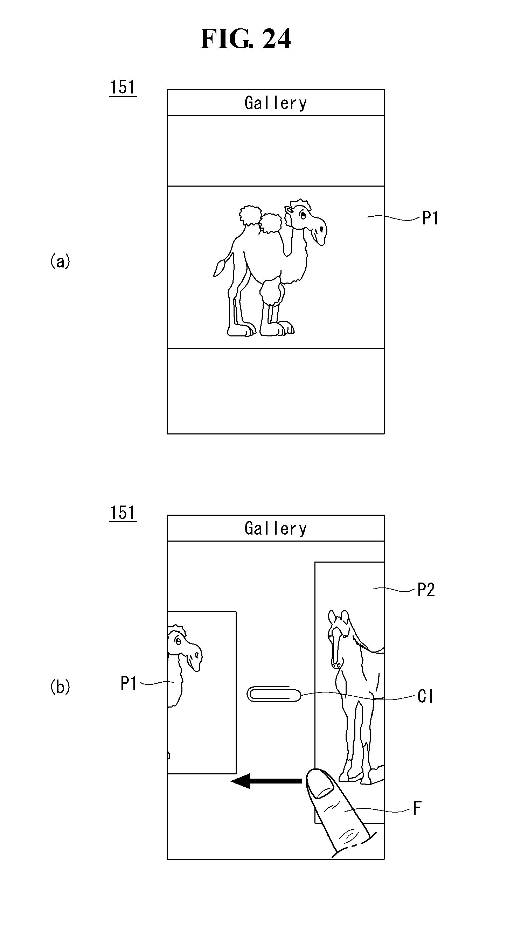

As shown in FIG. 24(a), a first image P1 may be displayed on the display 151. As shown in FIG. 24(b), when a touch operation is performed, the controller 180 displays an icon CI indicating that a second image P2 displayed on the display 151 is related to a first image P1. For example, when the second image P2 has been captured in the same place as that of the first image P1 or when the second image P2 includes the same person and/or object at that of the first image P1, the relevant icon CI may be displayed. The relevant icon CI is displayed while the touch operation is being performed, and when the touch operation is terminated, the icon CI may disappear.

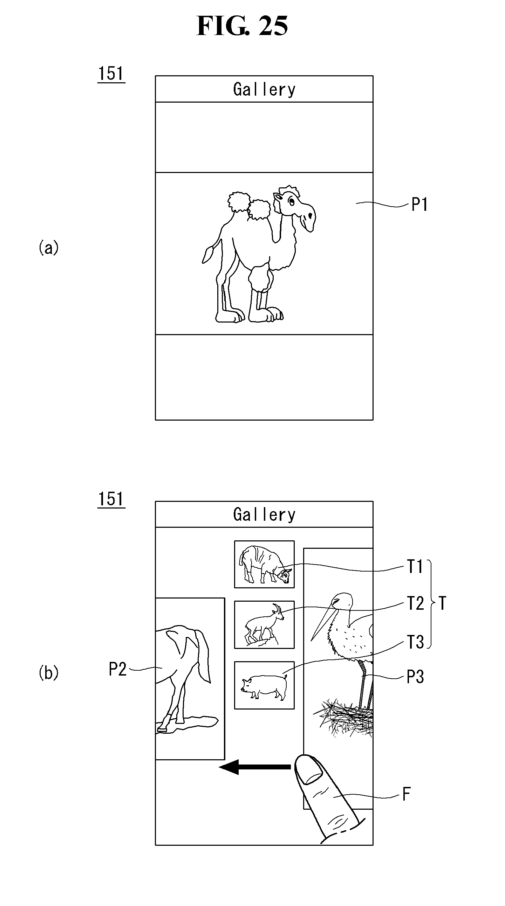

As shown in FIG. 25(a), the first image P1 is displayed on the display 151. As shown in FIG. 25(b), when a touch operation is performed, the controller 180 displays an image related to the first image P1 displayed on the display 151. For example, thumbnail images T may be displayed between the first image P1 and the third image P3 being scrolled according to the touch operation. The thumbnail images T may be thumbnails of an image related to the first image P1. The controller 180 may display the first to third thumbnail images (T1 to T3) related to the first image P1. The first to third thumbnail images T1 to T3 may disappear when the touch operation is stopped.

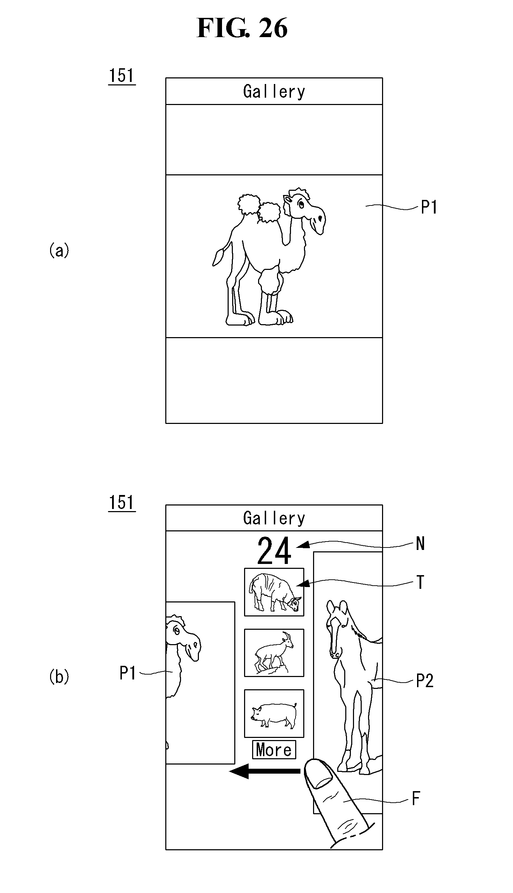

As shown in FIG. 26(a), the first image P1 may be displayed on the display 151. As shown in FIG. 26(b), a number indicator N indicating the number of images related to the thumbnail image T as related information may be displayed. When the number indicator N is displayed, the user can quickly and accurately recognize the number of images related to the image the user is viewing.

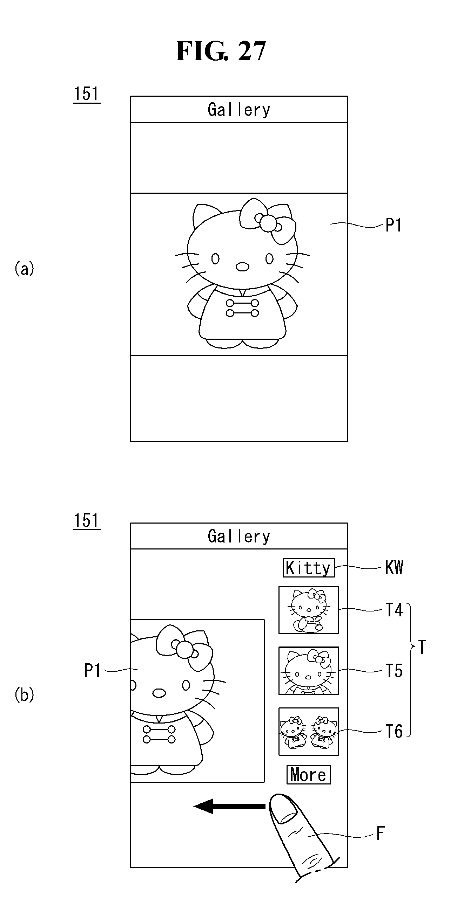

As shown in FIG. 27(a), a first image P1 is displayed on the display 151. As shown in FIG. 27(b), when a touch operation is performed, the controller 180 displays an image related to the corresponding image. For example, when an image related to a cat is included in the first image P1, the controller 180 may display thumbnail images T including cats or kittens. In addition, the controller 180 may further display a keyword KW indicating in what aspect the first image P1 and the thumbnail images T are related.

The above-described method of controlling the mobile terminal may be written as computer programs and may be implemented in digital microprocessors that execute the programs using a computer readable recording medium. The method of controlling the mobile terminal may be executed through software. The software may include code segments that perform required tasks. Programs or code segments may also be stored in a processor readable medium or may be transmitted according to a computer data signal combined with a carrier through a transmission medium or communication network.

The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, optical data storage devices. The computer readable recording medium may also be distributed over network coupled computer systems so that the computer readable code is stored and executed in a distribution fashion.

A mobile terminal may include a first touch screen configured to display a first object, a second touch screen configured to display a second object, and a controller configured to receive a first touch input applied to the first object and to link the first object to a function corresponding to the second object when receiving a second touch input applied to the second object while the first touch input is maintained.

A method may be provided of controlling a mobile terminal that includes displaying a first object on the first touch screen, displaying a second object on the second touch screen, receiving a first touch input applied to the first object, and linking the first object to a function corresponding to the second object when a second touch input applied to the second object is received while the first touch input is maintained.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal (100) comprising:
a wireless communication (110) unit configured to wirelessly communicate with at least one other terminal;
a touch screen display (151) configured to display particular contents; and
a controller (180) configured to:
obtain a first touch input action on the touch screen display (151) that lasts longer than a predetermined duration,
display more detailed information about the particular contents displayed on the display (151) as long as the first touch input action is being maintained, and
stop displaying the more detailed information when the first touch input action is released.

2. The mobile terminal (100) of claim 1, wherein the first touch input action includes a touch and drag or flicking input action on the touch screen display (151).

3. The mobile terminal (100) of any one of the preceding claims, further comprising:
a memory (160) configured to store a table mapping the first touch input action with the particular contents and the more detailed information to be displayed based on the first touch input action.

4. The mobile terminal (100) of any one of the preceding claims, wherein the controller (180) is further configured to:
obtain a second touch input action on the touch screen display (151) when the more detailed information is displayed, and
maintain the displaying of the more detailed information regardless of whether or not the first touch input action is released.

5. The mobile terminal (100) of claim 4, wherein the second touch input action is a touch input action maintained on a particular spot by more than a pre-set duration in which the first touch input action is set.

6. The mobile terminal (100) of any one of the preceding claims, wherein the more detailed information is at least one of additional information regarding the displayed contents, information regarding whether or not the displayed contents are executed, information regarding updating of the displayed contents, information regarding a call frequency of a phone call record included in the displayed contents, information regarding a message frequency of a message record included in the displayed contents, and information regarding an image included in the displayed contents.

7. The mobile terminal (100) of any one of the preceding claims, wherein the controller (180) is further configured to display the more detailed information by changing at least one of the color, size, and position of the displayed contents.

8. The mobile terminal (100) of any one of the preceding claims, wherein the controller is further configured to display the more detailed information by overlapping the more detailed information with at least a portion of the displayed contents.

9. The mobile terminal (100) of any one of the preceding claims, wherein the displayed contents include at least one of a call list, a message list, and a contact number list, and
wherein the controller is further configured to display the more detailed information on at least one of an item corresponding to a spot from which the first touch input action starts in at least one of the lists and an item having a high frequency selected from the at least one of the lists.

10. The mobile terminal (100) of any one of the preceding claims, wherein the displayed contents include an image, and
wherein the more detailed information includes at least one of an image captured from a substantially same location as that of the image, an image captured at a point in time similar to a point in time at which the image was captured, and an image including at least one object included in the image.

11. A method of controlling a mobile terminal (100), the method comprising:
allowing, via a wireless communication unit (110), wireless communication with at least one other terminal;
displaying, via a touch screen display (151), particular contents;
obtaining, via a controller (180), a first touch input action on the touch screen display that lasts longer than a predetermined duration;
displaying, via the controller (180) controlling the touch screen display (151), more detailed information about the particular contents displayed on the display (151) as long as the first touch input action is being maintained; and
stopping, via the controller (180), the displaying of the more detailed information when the first touch input action is released.

12. The method of claim 11, wherein the first touch input action includes a touch and drag or flicking input action on the touch screen display (151).

13. The method of any one of claims 11 - 12, further comprising:
storing, via a memory (160), a table mapping the first touch input action with the particular contents and the more detailed information to be displayed based on the first touch input action.

14. The method of claim13, further comprising:
obtaining, via the controller (180), a second touch input action on the touch screen display (151) when the more detailed information is displayed; and
maintaining, via the controller (180), the displaying of the more detailed information regardless of whether or not the first touch input action is released.

15. The method of claim 14, wherein the second touch input action is a touch input action maintained on a particular spot by more than a pre-set duration in which the first touch input action is set.
